# EUROPEAN PATENT APPLICATION

(11) **EP 4 601 029 A1**
(43) Date of publication of application: **13.08.2025**
(21) Application number: 23874703.4
(22) Date of filing: 25.09.2023
(51) Int. Cl.: H01M 4/139, B05D 1/28, B05D 3/00, B05D 5/12, B05D 7/00, B05D 7/14, H01M 4/62

(54) **METHOD FOR MANUFACTURING ELECTRODE LAYER**

(30) Priority: 03.10.2022 JP 2022159830
(71) Applicant: FUJIFILM Corporation, Tokyo 106-8620 (JP)
(72) Inventor: ICHIKAWA, Kenji, Minamiashigara-shi, Kanagawa 250-0193 (JP); IWASE, Eijiro, Minamiashigara-shi, Kanagawa 250-0193 (JP)
(74) Representative: Meissner Bolte Partnerschaft mbB
(86) International application number: PCT/JP2023/034790
(87) International publication number: WO 2024/075575

(57) **Abstract**

Provided is a manufacturing method of an electrode layer, including a step A of measuring a surface shape of a transport member, a step B of placing a collector foil on the transport member after the surface shape is measured, and transporting the collector foil by moving the transport member, a step C of supplying, onto the transported collector foil, an electrode active material containing an electrode active material, a conductive auxiliary agent, and an electrolytic solution, and a step D of passing the electrode material supplied onto the collector foil through a gap formed between the transport member and a distal end of a film forming member which is disposed at a position spaced apart from a surface of the transport member to regulate a thickness of the electrode material and form an electrode material film, in which, in the step D, a disposing position of the film forming member is controlled based on measurement information of the surface shape of the transport member, which is obtained in the step A.

## Description

### BACKGROUND OF THE INVENTION

### 1. Field of the Invention

The present disclosure relates to a manufacturing method of an electrode layer.

### 2. Description of the Related Art

In recent years, development of a semi-solid state battery has been studied.

An electrode applied to the semi-solid state battery is manufactured using, for example, an electrode material containing at least an electrode active material which is a powder and an electrolytic solution.

JP2021-530826A discloses a method of manufacturing a semi-solid electrode, the method including continuously disposing a mask material on a collector material, continuously distributing a semi-solid electrode slurry on the collector material, removing the mask material to at least partially define separate portions of the semi-solid electrode slurry on the collector, and cutting the collector to form the semi-solid electrode. In addition, JP2021-530826A also discloses that, in the method, the semi-solid electrode slurry is spread by a blade, and the blade vibrates.

JP2017-533548A discloses a method of manufacturing an electrochemical cell, the method including a step of disposing a frame which defines an opening portion on a surface of a collector, a step of disposing a semi-solid anode material in the opening portion of the frame, and a step of removing an excess semi-solid anode material from the opening portion. In addition, JP2017-533548A also discloses that an excess amount of the semi-solid state anode material is removed by a doctor blade, and the doctor blade vibrates during the removal step.

### SUMMARY OF THE INVENTION

As disclosed in JP2021-530826A and JP2017-533548A, there is a method of forming an electrode material film on a collector foil by supplying an electrode material on the collector foil and leveling the electrode material supplied on the collector foil using a film forming member.

In the above-described method, from the viewpoint of productivity, a method of continuously forming an electrode material film on a collector foil transported by a transport member may be adopted.

However, the transport member which transports the collector foil is often not flat due to undulations or the like. Therefore, depending on a surface shape of the transport member, a difference in thickness (also referred to as a thickness distribution) may occur in the plane of the electrode material film formed on the collector foil.

Therefore, the present disclosure has been made in view of the above-described circumstances.

An object of one embodiment of the present disclosure is to provide a manufacturing method of an electrode layer, which can manufacture an electrode layer having an electrode material film with excellent in-plane thickness uniformity.

Here, the "electrode layer" means a laminate of a collector foil and the electrode material film.

The present disclosure includes the following aspects.
<1> A manufacturing method of an electrode layer, including:
   a step A of measuring a surface shape of a transport member;
   a step B of placing a collector foil on the transport member after the surface shape is measured, and transporting the collector foil by moving the transport member;
   a step C of supplying, onto the transported collector foil, an electrode active material containing an electrode active material, a conductive auxiliary agent, and an electrolytic solution; and
   a step D of passing the electrode material supplied onto the collector foil through a gap formed between the transport member and a distal end of a film forming member which is disposed at a position spaced apart from a surface of the transport member to regulate a thickness of the electrode material and form an electrode material film,
   in which, in the step D, a disposing position of the film forming member is controlled based on measurement information of the surface shape of the transport member, which is obtained in the step A.
<2> The manufacturing method of an electrode layer according to <1>,
   in which, in the step D, a distal end position of the film forming member is adjusted according to a force applied to the film forming member by the electrode material.
<3> The manufacturing method of an electrode layer according to <1> or <2>,
   in which a vibrating film forming member is used as a film forming material, and
   in the step D, at least one of a frequency or an amplitude of vibration of the film forming member is changed based on a force applied to the film forming member by the electrode material.
<4> The manufacturing method of an electrode layer according to any one of <1> to <3>,
   in which a concentration of solid components of the electrode material is 30% by volume to 90% by volume.
<5> The manufacturing method of an electrode layer according to any one of <1> to <4>,
   in which, in a case where a maximum height of the electrode material supplied in the step C is indicated by X and a width of the gap formed between the transport member and the distal end of the film forming member which is disposed at the position spaced apart from the surface of the transport member is indicated by Y, a relationship of X > Y is satisfied.

According to one embodiment of the present disclosure, it is possible to provide a manufacturing method of an electrode layer, which can manufacture an electrode layer having an electrode material film with excellent in-plane thickness uniformity.

### BRIEF DESCRIPTION OF THE DRAWINGS

Fig. 1 is a schematic cross-sectional view for describing an example of a step A to a step E in a manufacturing method of an electrode layer according to the present disclosure.
Fig. 2 is a schematic cross-sectional view in a case where a blade as a film forming member is viewed from a transport direction of a pallet.
Fig. 3 is a schematic cross-sectional view in a case where the blade as a film forming member is viewed from the transport direction of the pallet.
Fig. 4 is a schematic cross-sectional view in a case where the blade as a film forming member and the pallet are viewed from a side surface.
Fig. 5 is a schematic cross-sectional view for describing a method of adjusting a distal end position of the film forming member based on a force applied to the film forming member by an electrode material.
Fig. 6 is a schematic cross-sectional view for describing an example of a transport member used in the manufacturing method of an electrode layer according to the present disclosure.

### DESCRIPTION OF THE PREFERRED EMBODIMENTS

Hereinafter, embodiments of the present disclosure will be described with reference to the accompanying drawings. The present disclosure is not limited in any way to the following embodiments, and may be implemented with appropriate modifications within the scope of the purpose of the present disclosure. The constituent elements indicated by the same reference numeral in each drawing mean the same constituent element. The description of redundant constitutional elements and reference numerals in each drawing may be omitted. A dimensional ratio in the drawings does not necessarily represent the actual dimensional ratio.

In the present disclosure, the numerical ranges shown using "to" indicate ranges including the numerical values described before and after "to" as the lower limit value and the upper limit value. Regarding numerical ranges that are described stepwise in the present disclosure, an upper limit value or a lower limit value described in a numerical range may be replaced with an upper limit value or a lower limit value of another stepwise numerical range. In addition, in a numerical range described in the present disclosure, an upper limit or a lower limit described in a certain numerical range may be replaced with a value described in Examples.

In the present disclosure, a term "step" denotes not only an individual step but also a step which is not clearly distinguishable from another step as long as an effect expected from the step can be achieved.

In the present disclosure, in a case where a plurality of substances corresponding to each component in a composition is present, the amount of each component in the composition means the total amount of the plurality of substances present in the composition, unless otherwise specified.

In the present disclosure, a combination of two or more preferred aspects or forms is a more preferred aspect or form.

In the present disclosure, "solid component" means a component in a solid state at 25°C and 1 atm, and "liquid component" means a component in a liquid state at 25°C and 1 atm.

### <Manufacturing method of electrode layer>

The manufacturing method of an electrode layer according to the present disclosure is a manufacturing method of an electrode layer, including a step A of measuring a surface shape of a transport member, a step B of placing a collector foil on the transport member after the surface shape is measured, and transporting the collector foil by moving the transport member, a step C of supplying, onto the transported collector foil, an electrode active material containing an electrode active material, a conductive auxiliary agent, and an electrolytic solution, and a step D of passing the electrode material supplied onto the collector foil through a gap formed between the transport member and a distal end of a film forming member which is disposed at a position spaced apart from a surface of the transport member to regulate a thickness of the electrode material and form an electrode material film, in which, in the step D, a disposing position of the film forming member is controlled based on measurement information of the surface shape of the transport member, which is obtained in the step A.

Hereinafter, the manufacturing method of an electrode layer according to the present disclosure will be described by taking an example in which the transport member is a transport member in which a plurality of pallets are connected in one direction.

In a case where the transport member in which a plurality of pallets are connected in one direction is used, after the electrode material film is formed on the collector foil to be transported by going through the step D, the method may further include a step E of spacing the connected pallets apart from each other to divide the laminate of the collector foil and the electrode material film for each one pallet.

The transport member is not limited to the transport member in which a plurality of pallets are connected in one direction.

In the present disclosure, it is preferable that the electrode material film contains an electrode active material, a conductive auxiliary agent, and an electrolytic solution, has a thickness of 50 µm to 500 µm, and has a concentration of solid components of 30% by volume to 90% by volume. That is, in the manufacturing method of an electrode layer according to the present disclosure, it is preferable to form, on a collector foil, an electrode material film having a thickness of 70 µm to 230 µm and a concentration of solid components of 30% by volume to 90% by volume.

Here, the thickness of the electrode material film is an arithmetic average value of thicknesses at three points measured by cross-sectional observation. In the cross-sectional observation, a known microscope (for example, a scanning electron microscope) can be used.

In addition, the concentration of solid components in the electrode material film is calculated from a compositional ratio of each component contained in the electrode material film and a specific gravity of the components.

As described above, there is a method of continuously forming an electrode material film on a collector foil by supplying an electrode material on the collector foil to be transported and leveling the electrode material supplied on the collector foil using a film forming member. However, depending on a surface shape of the transport member which transports the collector foil, a difference in thickness (also referred to as a thickness distribution) may occur in the plane of the electrode material film formed on the collector foil.

Therefore, the present inventors have found a method of measuring a surface shape of the transport member in advance, controlling a disposing position of a distal end of the film forming member based on the measurement information, and forming an electrode material film having excellent thickness uniformity; and have completed the present disclosure by adopting the above-described method as the manufacturing method of an electrode layer according to the present disclosure.

JP2021-530826A does not pay any attention to the surface shape of the member which transports the collector foil, and does not disclose the control of the position where the film forming member is disposed. In addition, JP2017-533548A does not mention the transport of the collector foil.

Hereinafter, each step in the manufacturing method of an electrode layer according to the present disclosure will be described.

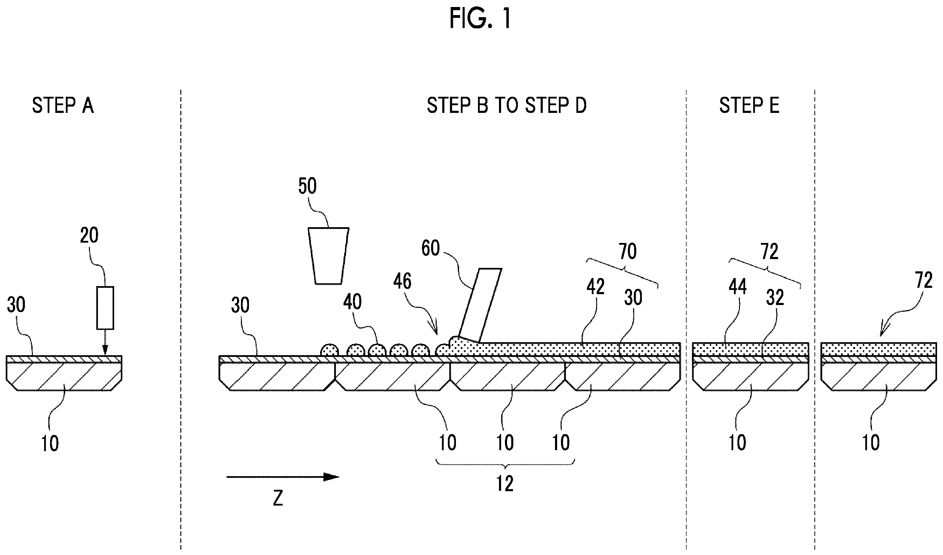

An example of the step A to the step D will be described with reference to Fig. 1.

As shown in Fig. 1, in the step A, a surface shape of a pallet 10 constituting a transport member 12 is measured using a surface shape measuring device 20. Here, the surface shape of the pallet 10 on which a collector foil 30 is placed is measured.

Next, in the step B, in a state in which the collector foil 30 is placed on the transport member 12 formed by connecting the pallets 10 in one direction after measuring the surface shape, the transport member 12 is moved to transport the collector foil 30 along a Z direction (also referred to as an MD direction). The Z direction also corresponds to a connection direction of the pallets.

Subsequently, in the step C, an electrode material 40 containing an electrode active material, a conductive auxiliary agent, and an electrolytic solution is supplied from a supply device 50 onto the transported collector foil 30.

Furthermore, the electrode material 40 supplied onto the collector foil 30 is allowed to pass through a gap formed between the transport member 12 and a distal end of a blade 60 as a film forming member, which is disposed at a position spaced apart from a surface of the transport member 12, to regulate a thickness of the electrode material 40 and form an electrode material film 42.

By going through the above-described steps, a laminate 70 of the collector foil 30 and the electrode material film 42 is formed on the pallet 10 of the transport member 12. The Z direction in Fig. 1 also corresponds to a transport direction of the collector foil 30, the pallets 10, the transport member 12 obtained by connecting the pallets 10, and the like.

In the step D, a disposing position of the distal end of the blade 60 (also referred to as a distal end position of the blade 60) is controlled based on the measurement information of the surface shape of the transport member 12, which is obtained in the step A. In this manner, a distance of the gap can be adjusted according to the surface shape of the transport member 12, and as a result, the electrode material film 42 with excellent in-plane thickness uniformity is formed on the collector foil 30.

Hereinafter, each of the step A to the step D will be described.

### [Step A]

In the step A, the surface shape of the transport member is measured.

Hereinafter, the transport member will be described as the transport member in which a plurality of pallets are connected in one direction.

### (Measurement of surface shape)

The surface shape of the transport member (for example, the pallet) measured in the step A is undulations on the surface on which the collector foil is placed, an inclination of the pallet (in a width direction and in a longitudinal direction), and the like. From the viewpoint of increasing the thickness uniformity of the electrode material film, it is preferable that the surface shape of the pallet is measured in a state in which the collector foil is placed.

For the measurement of the surface shape, for example, a non-contact type device such as a laser displacement meter, a confocal laser optical system, a multi-color laser coaxial displacement meter, and a white light interferometer is preferably used.

The measurement of the surface shape may be performed by an online examination, an offline examination, or a combination thereof.

As described above, the surface shape is obtained as height information of the pallet.

A measurement target position is the entire region on the surface of the pallet, on which the collector foil is placed.

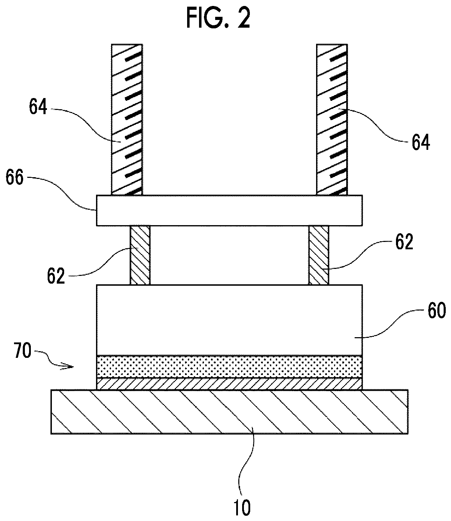

In addition, the number of the measurement positions is preferably two or more in the width direction of the pallet (direction orthogonal to the transport direction), and may be three or more in a case where more detailed measurement is performed. Specific examples of the measurement position include three points of a center portion and both end parts of a region in which the collector foil is in contact with the pallet in the width direction. By measuring these three points, the inclination of the pallet in the width direction is measured. In addition, two points in the width direction of the pallet may be used as the measurement position. In this case, it is preferable that the two measurement positions are coaxial with two points of a connection point between the film forming member and a piezoelectric actuator as shown in Fig. 2 described later. That is, the measurement position in the width direction of the pallet may be determined in accordance with the number of connection points between the film forming member and the piezoelectric actuator. In this case, the number m of connection points between the film forming member and the piezoelectric actuator and the number n of measurement positions in the width direction of the pallet may be the same (m = n), or m - 1 = n.

In addition, regarding the measurement position in the transport direction (that is, the connection direction) of the pallet, for example, it is preferable to measure at an interval of 0.1 mm to 10 mm, specifically, at an interval of 1 mm.

By measuring the surface shape at the above-described measurement position, the position information of the pallet and the height information of the pallet can be measured in synchronization. For example, a programmable logic controller (PLC) is used for controlling the measurement.

### (Pallet and transport member)

The pallet and the transport member used in the step A will be described.

It is desirable that the pallet has a mechanical strength as a transport member, adsorptivity of the collector foil, and a mechanical strength required in a case of forming an electrode material film.

The pallet having the above-described characteristics is preferably a laminate of a porous layer in which one surface is a contact surface with the collector foil, and a base material layer which ensures the mechanical strength.

The porous layer in the pallet is desirably a layer having continuous (connected) air pores in a matrix material. Due to the presence of such air pores, a pressure in the air pores in the porous layer is reduced, and thus the collector foil placed on the porous carbon layer can be adsorbed. Therefore, an exposed surface of the porous layer can be used as the contact surface with the collector foil.

For example, from the viewpoint of desiring high mechanical strength while being lightweight, it is preferable that the matrix material of the porous layer contains a carbon material. That is, the porous layer is preferably a porous carbon layer called as porous carbon.

From the viewpoint of mechanical strength, a thickness of the porous layer (preferably, the porous carbon layer) is preferably 3 mm to 15 mm and more preferably 5 mm to 10 mm.

The base material layer in the pallet is a layer provided adjacent to the porous layer, and a material thereof is not particularly limited. For example, from the viewpoint of desiring high mechanical strength while being lightweight, a carbon fiber composite material layer is preferable.

The carbon fiber composite material layer is a layer containing a composite material (that is, a carbon fiber composite material) including a base material (that is, a matrix) and carbon fibers. Examples of the carbon fiber composite material constituting the carbon fiber composite material layer include carbon fiber reinforced plastic (CFRP) and carbon fiber reinforced carbon composite material (C/C composite). Examples of the base material include a thermosetting resin (for example, an epoxy resin), and a carbonized product of the resin.

From the viewpoint of mechanical strength, a thickness of the base material layer (preferably, the carbon fiber composite material layer) is preferably 5 mm to 30 mm and more preferably 15 mm to 25 mm.

It is preferable that the pallet is provided with a void portion at a position adjacent to the porous layer. The void portion is connected to a vacuum pump or the like through an intake hole leading to the outside of the pallet, and the inside of the void portion and the air pores of the porous layer can be depressurized. By the depressurization, the collector foil can be adsorbed to the exposed surface of the porous layer.

From the viewpoint of mechanical strength, the total thickness of the pallet is preferably 5 mm to 50 mm or less, and more preferably 25 mm to 35 mm.

In the step A, as shown in Fig. 1, the surface shape of the pallet is measured. The measured pallets are connected in one direction to be a transport member which transports the collector foil.

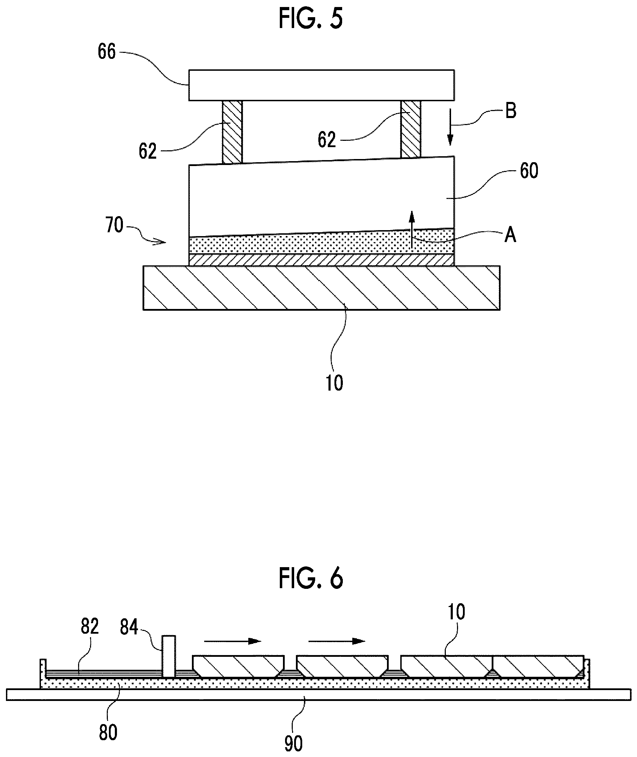

The connection of the pallets will be described with reference to Fig. 6.

As shown in Fig. 6, a table 80, a rail 82 installed on the table 80, and a fixing member 84 which fixes the plurality of the pallets 10 are used for connecting the plurality of the pallets 10. The pallet 10 has a guide groove (not shown) on a back surface thereof. The plurality of the pallets 10 are placed on the table 80 by fitting the guide groove on the back surface of the pallet 10 to the rail 82. The respective pallets 10 are slid and moved in an arrow direction along the rail 82 to press and closely attach the pallets 10 to each other. Thereafter, the closely attached pallets 10 are fixed by the fixing member 84, and thus the transport member in which the plurality of the pallets 10 are connected in one direction is obtained.

### [Step B]

In the step B, the collector foil is placed on the transport member after the surface shape is measured, and the collector foil is transported by moving the transport member.

As described above, the pallets in which the surface shape has been measured in the step A are connected in one direction to be the transport member which transports the collector foil. The collector foil is placed on the obtained transport member, and then the transport member on which the collector is adsorbed is moved and the collector foil is also transported.

### (Transportation speed)

A transportation speed of the collector foil is not particularly limited, and the transportation speed may be set according to a film forming speed in the step C described later.

The transportation speed of the collector foil is selected to be, for example, 10 mm/sec to 500 mm/sec.

A transporting and moving unit for the transport member is not particularly limited. For example, as shown in Fig. 6, the transport member in which the plurality of the pallets 10 are connected is transported by moving the table 80 on which the transport member has been placed, using a linear motion guide (LM guide) 90 or the like.

### [Step C]

In the step C, the electrode material containing an electrode active material, a conductive auxiliary agent, and an electrolytic solution is supplied onto the transported collector foil.

As described above, a desired amount of the electrode material is supplied onto the collector foil in which the transport is started in the step B.

### (Supply device)

A device for supplying the electrode material onto the collector foil may be, for example, a device which intermittently or continuously supplies the electrode material onto the collector foil.

Examples of the supply device include a hopper, a screw feeder, a disc feeder, and a vibration feeder.

In a case where the electrode material is supplied onto the collector foil, a regulating frame can also be used from the viewpoint of uniformizing the supply of the electrode material. The regulating frame is placed on the pallet, and thus it is possible to suppress the electrode material from being exposed outside the collector foil.

An amount of supplying the electrode material onto the collector foil is not particularly limited, and may be appropriately determined according to the amount of the electrode material film to be formed.

However, from the viewpoint of efficiently forming the electrode material film from the electrode material supplied onto the collector foil using the film forming member in the step D described later, in a case where the maximum height of the electrode material supplied in the present step is indicated by X and a width of the gap formed between the transport member and the distal end of the film forming member disposed at a position spaced apart from the surface of the transport member in the step D is indicated by Y, it is preferable to satisfy a relationship of X > Y.

The electrode material containing an electrode active material, a conductive auxiliary agent, and an electrolytic solution, which is used in the present step, will be described later.

### [Step D]

In the step D, the electrode material supplied onto the collector foil is allowed to pass through the gap formed between the transport member and the distal end of the film forming member, which is disposed at a position spaced apart from the surface of the transport member, to regulate the thickness of the electrode material and form the electrode material film.

In the step D, the disposing position of the film forming member is controlled based on the measurement information of the surface shape of the transport member, which is obtained in the step A.

As shown in Fig. 1, a reservoir portion 46 formed by the electrode material 40 supplied onto the collector foil 30 is formed between the collector foil 30 and the blade 60. In this state, the collector foil 30 is transported and moved in the Z direction by the transport member 12, so that the electrode material 40 passes through the gap between the blade 60 and the surface of the transport member 12. In a case where the electrode material 40 passes through the gap, the thickness of the electrode material 40 is regulated by the gap, and the electrode material 40 is further applied onto the surface of the collector foil 30, whereby the electrode material film 42 formed of the electrode material 40 is formed on the collector foil 30.

### (Control of film forming member and disposing position of distal end thereof)

The control of the film forming member used in the present step and the disposing position of the distal end thereof will be described with reference to Fig. 2. Here, Fig. 2 is a schematic cross-sectional view in a case where the blade as the film forming member is viewed from the transport direction of the pallet.

As shown in Fig. 2, for example, two piezoelectric actuators 62 are connected to the blade 60, and two ball screws 64 are connected to the piezoelectric actuators 62 through a connecting portion 66.

One end part of the ball screw 64 is connected to a drive shaft of a stepping motor (not shown), and a rotational driving force of the stepping motor is transmitted to the ball screw 64. Accordingly, the ball screw 64 receives the rotational driving force transmitted from the stepping motor and rotates, and the disposing position of the distal end of the blade 60 can be adjusted in accordance with this rotation.

In addition, the piezoelectric actuator 62 is a so-called piezoelectric element which is deformed to generate displacement in a case where a voltage is applied, and expands and contracts on the order of µm due to a change in the applied voltage. By using the expansion and contraction, the disposing position of the distal end of the blade 60 can be adjusted.

As described above, the piezoelectric actuator 62 and the ball screw 64 (and the stepping motor connected thereto) are members capable of adjusting the disposing position of the distal end of the blade 60. At least one of the piezoelectric actuator 62 or the ball screw 64 is used for adjusting the disposing position of the distal end of the blade 60.

In a case where there is no large height difference in the surface shape of the pallet 10, and in a case where the allowable range of the variation in thickness of the electrode material film is large, one of the piezoelectric actuator 62 or the ball screw 64 for adjusting the disposing position of the distal end of the blade 60 can also be omitted.

The control of the disposing position of the distal end of the film forming member is performed by, for example, the PLC.

As described above, the PLC plots the position of the pallet on the X coordinate and the height of the pallet (corresponding to the surface position of the collector foil adsorbed to the pallet) on the Y coordinate based on the measurement result obtained by synchronizing the position information of the pallet and the height information of the pallet. In addition, the PLC recognizes the distal end position of the film forming member as the position information of the ball screw 64.

In the PLC, a control signal for moving the distal end position of the film forming member up and down is sent by synchronizing the relative change of the Y coordinate with the position of the pallet in the X coordinate, whereby a gap along the surface shape of the pallet is created.

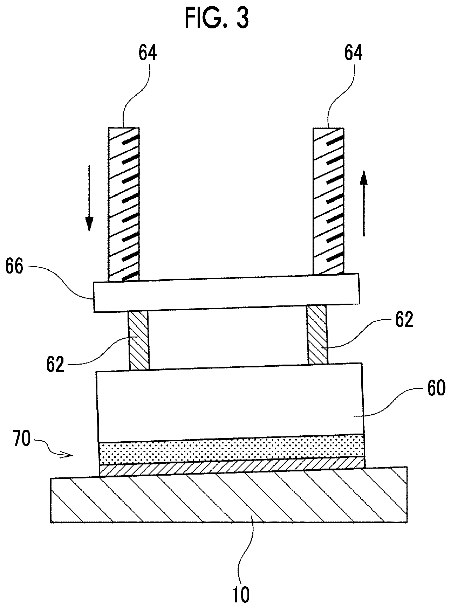

Hereinafter, an example of a method of adjusting the disposing position of the distal end of the blade will be described with reference to Fig. 3. Here, Fig. 3 is a schematic cross-sectional view in a case where the blade as the film forming member is viewed from the transport direction of the pallet.

As shown in Fig. 3, in a case where the surface shape of the pallet 10 constituting the transport member has an upward inclination to the right, the disposing position of the distal end of the blade 60 is adjusted to the surface shape of the pallet 10 by shortening the ball screw 64 on the right side and extending the ball screw 64 on the left side.

In this way, a gap formed between the pallet 10 as the transport member and the distal end of the blade 60 disposed at a position spaced apart from the surface of the pallet 10 can be made uniform.

As a result, an electrode material film with excellent thickness uniformity is obtained regardless of the surface shape of the pallet 10.

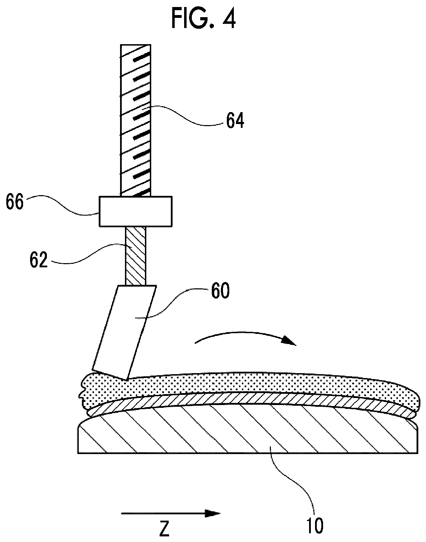

In addition, another example of the method of adjusting the disposing position of the blade will be described with reference to Fig. 4. Here, Fig. 4 is a schematic cross-sectional view in a case where the blade as the film forming member and the pallet are viewed from a side surface.

As shown in Fig. 4, in a case where the surface shape of the pallet 10 constituting the transport member is inclined in an arc shape in the transport direction, the installation position is changed along the surface shape of the pallet while expanding and contracting the two ball screws 64, thereby matching the surface shape of the pallet 10.

In this way, a gap formed between the pallet 10 as the transport member and the blade 60 disposed at a position spaced apart from the surface of the pallet 10 can be made uniform. As a result, an electrode material film with excellent thickness uniformity is obtained regardless of the surface shape of the pallet 10.

In the above-described two examples, the method of adjusting the disposing position of the distal end of the blade 60 mainly using the ball screw 64 has been described. However, in addition to the expansion and contraction of the ball screw 64, the uniformity of the gap formed between the pallet 10 as the transport member and the distal end of the blade 60 disposed at a position spaced apart from the surface of the pallet 10 can be made more uniform by changing an offset value of the piezoelectric actuator 62.

By using the expansion and contraction of the ball screw 64, the disposing position of the distal end of the blade 60 can be adjusted to be approximately 20 µm to 100 µm.

In addition, according to the adjustment of the offset value of the piezoelectric actuator 62 (specifically, the adjustment by the change in length of the piezoelectric element (that is, the expansion and contraction of the piezoelectric element)), the disposing position of the distal end of the blade 60 can be adjusted to be approximately ±5 µm.

In the step D, the distal end position of the film forming member can also be adjusted according to the force applied to the film forming member by the electrode material. As will be described later, the electrode material is a material containing a large amount of solid components, and thus has a high viscosity. Therefore, the force from the electrode material in contact with the blade to forcibly widen the gap is applied to the blade as the film forming member. In particular, in a case where a large amount of the electrode material is locally supplied onto the collector foil, the force to forcibly widen the gap tends to increase.

Therefore, as described above, it is preferable to adjust the distal end position of the film forming member according to the force applied to the film forming member by the electrode material.

In order to adjust the distal end position of the film forming member in this case, it is preferable to use the piezoelectric actuator. This is because the piezoelectric actuator can quickly adjust the distal end position of the film forming member by changing the applied voltage.

A method of adjusting the distal end position of the film forming member according to the force applied to the film forming member by the electrode material will be described with reference to Fig. 5.

As shown in Fig. 5, in a case where a force is applied from the electrode material to the blade 60 in an A direction and thus the gap is forcibly widened, the right piezoelectric actuator 62 is quickly extended in a B direction, and the position of the distal end of the blade 60 is adjusted to the position before the gap is forcibly widened.

As a result, it is possible to suppress the change in thickness of the electrode material film caused by the gap being forcibly widened.

In the step D, a vibrating film forming member can be used. That is, a vibrating blade can be used as the blade which is the film forming member.

For example, in a case where the blade 60 vibrates, the vibration propagates to the electrode material 40 and a shearing force is applied, so that the viscosity of the electrode material 40 may be decreased and the fluidity may be improved. As a result, as described above, at least the surface of the electrode material film 42 formed by being applied onto the collector foil 30 is leveled, and the electrode material film 42 with a small variation in thickness is easily formed.

In addition, in a case where the film forming member (specifically, the blade) vibrates, it is preferable to change at least one of a frequency or an amplitude of vibration of the film forming member based on the force applied to the film forming member by the electrode material.

In this case, it is preferable to use the piezoelectric actuator for adjusting the frequency and the amplitude of the vibration of the film forming member.

As described above, by vibrating the film forming member, the viscosity of the electrode material can be decreased and the fluidity can be improved. Therefore, for example, as described above, in a case where the force from the electrode material in contact with the blade is applied to the blade which is the film forming member and thus the gap is forcibly widened, by performing at least one of increasing the frequency of the vibration of the film forming member or increasing the amplitude of the vibration of the film forming member, the viscosity of the electrode material is decreased, and the fluidity is further increased, whereby the position of the distal end of the film forming material can be quickly returned to the position before the gap is forcibly widened.

As a result, it is possible to suppress the change in thickness of the electrode material film caused by the gap being forcibly widened.

The above-described adjustment of the distal end position of the film forming material and the above-described adjustment of the frequency and the amplitude of the vibrating film forming material by the piezoelectric actuator are performed as follows.

A strain gauge is attached to the blade which is the film forming member, and a force received from the electrode material (specifically, a vertical stress received from the electrode material) is detected. Accordingly, in a case where a state in which the gap is forcibly widened by the force received from the electrode material is detected, the offset value of the piezoelectric actuator is adjusted, and at least one of the frequency or the amplitude of the vibrating film forming material is adjusted based on the information.

A more specific description will be provided. The piezoelectric actuator is compressed and shrinks due to the force received from the electrode material. As a result, a state in which the gap is forcibly widened is detected.

As the number of electrode materials in contact with the film forming material increases and the force received from the electrode materials is stronger, the amount of shrinkage of the piezoelectric actuator increases, the gap is widened, and as a result, the thickness of the electrode material film increases. Therefore, in a case where the state in which the gap is forcibly widened is detected, it is desirable to strongly apply energy to the electrode material in the region to suppress the fluctuation in thickness of the electrode material film. Specific examples thereof include 1. increasing the length of the entire piezoelectric actuator to narrow the spread gap, 2. increasing the number of times the film forming material vibrates (that is, increasing the frequency), and 3. increasing the amplitude of the vibration of the film forming material. By performing any of these methods, the fluctuation in thickness of the electrode material film is suppressed.

The force received from the electrode material, which is detected by the strain gauge attached to the film forming member, is converted into a voltage by a dynamic strain meter (amplifier). A waveform of the converted voltage is input to a computer such as PC, and the amplitude, frequency, and phase of the waveform of the voltage are calculated by the computer such that the control is applied to the electrode material once in a length of approximately 1 mm in the transport direction (that is, the MD direction). The obtained calculated value is transmitted to the PLC, and the difference in amplitude of the vibration or the difference in frequency of the vibration, with respect to the set value, is corrected by the PLC so as to be an optimum value (set clearance) in a case where the film forming member is in contact with the electrode material.

In this manner, the electrode material film is formed on the collector foil placed on the transport member.

### [Step E]

In the manufacturing method of an electrode layer according to the present disclosure, after the step D, a step E of spacing the connected pallets apart from each other to divide the laminate of the collector foil and the electrode material film for each one pallet may be included.

In the step E, the long electrode material film formed in the step D is cut to a length of the pallet (specifically, a length of the pallet in the transport direction (Z direction in Fig. 1)) together with the collector foil.

In the step E, the connected pallets are spaced apart from each other, but the spacing condition may be appropriately determined depending on how easily the formed electrode material film collapses.

Examples of the spacing condition include a speed or an acceleration in a case where the pallets are spaced apart from each other.

It is preferable that the speed or the acceleration in a case of spacing the pallets is smaller, as the electrode material film easily collapses.

In this manner, an electrode layer which is the laminate (a divided laminate 72 in Fig. 1) of the collector foil and the electrode material film is formed on the pallet.

### [Other steps]

The manufacturing method of an electrode layer according to the present disclosure may include other steps.

Examples of the other steps include a step of pressurizing the electrode material film.

### (Step of pressurizing electrode material film)

The manufacturing method of an electrode layer according to the present disclosure may include a step of pressurizing the electrode material film.

In a case where the manufacturing method of an electrode layer according to the present disclosure includes the pressurization step, a density of the electrode material can be increased, and a density of the solid components and in-plane uniformity of density and thickness can be achieved.

In the present step, for example, it is preferable that the electrode material film is pressurized by pressurizing the laminate placed on the pallet using a pressurization roller. In this case, it is preferable that a film is placed on the electrode material film, and then the laminate is pressurized by pressing the pressurization roller against the film.

In the present step, for example, a press machine may be used as the pressurizing unit. Furthermore, as the pressurizing unit, a vibrating pressurizing unit may be used.

In a case of pressurizing the laminate, a pressure is preferably 0.01 MPa to 100 MPa, more preferably 0.1 MPa to 50 MPa, and particularly preferably 0.2 MPa to 10 MPa.

In the present step, the laminate may be pressurized stepwise using a plurality of pressurizing units. By stepwise pressurizing the electrode material film using a plurality of pressurizing units, the density and thickness of the electrode material can be made more uniform.

In the present step, it is preferable to move the pressurizing unit and the electrode material film (specifically, the collector foil on which the electrode material film has been formed) relative to each other.

In the present disclosure, "move the pressurizing unit and the electrode material film relative to each other" includes moving the pressurizing unit in one direction with respect to the electrode material film, moving the electrode material film in one direction with respect to the pressurizing unit, and moving the pressurizing unit and the electrode material film in one direction, respectively; but it is preferable to move the electrode material film in one direction with respect to the pressurizing unit.

In the present step, from the viewpoint of improving formability, for example, the electrode material film heated at 30°C to 100°C may be pressurized.

Hereinafter, the collector foil and the molding member, which are used in the manufacturing method of an electrode layer according to the present disclosure, will be described in detail.

In addition, details of the electrode material (material including an electrode active material, a conductive auxiliary agent, an electrolytic solution, and the like) will also be described.

### [Collector foil]

The collector foil is not particularly limited, and known collector foils (a positive electrode collector foil and a negative electrode collector foil) can be used.

Examples of the positive electrode collector foil include aluminum, an aluminum alloy, stainless steel, nickel, and titanium. The positive electrode collector foil is preferably aluminum or an aluminum alloy. The positive electrode collector foil may be aluminum having, on a surface thereof, a coating layer containing one or more of carbon, nickel, titanium, silver, gold, platinum, and vanadium oxide.

Examples of the negative electrode collector foil include aluminum, copper, a copper alloy, stainless steel, nickel, and titanium. The negative electrode collector foil is preferably aluminum, copper, a copper alloy, or stainless steel, and more preferably copper or a copper alloy. The negative electrode collector foil may be copper or stainless steel, having, on a surface thereof, a coating layer containing one or more of carbon, nickel, titanium, silver, and lithium.

The collector foil is preferably an aluminum foil (including an aluminum foil having the above-described coating layer on the surface thereof) or a copper foil (including a copper foil having the above-described coating layer on the surface thereof). The aluminum foil is generally used as a collector foil in a positive electrode. The copper foil is generally used as a collector foil in a negative electrode.

In addition, the collector foil may be a laminate of the metal layer exemplified as the positive electrode collector foil or the negative electrode collector foil described above, and a resin film. Examples of the resin film used in the laminate include resin films such as a polyethylene terephthalate (PET) film, a polypropylene (PP) film, a polyethylene (PE) film, a cyclic olefin polymer (COP or COC) film, a triacetyl cellulose (TAC), a polyimide (PI) film, and a polyamide (PA) film.

In a case where the above-described laminate of the metal layer and the resin film is used, it is preferable that a surface of the metal layer, on which the electrode material film is formed, can be divided in a surface direction.

For example, a collector foil in which a plurality of metal layers (metal layers serving as the collector foil) having a desired size are arranged on a resin film to be spaced from each other, a resin film portion between the metal layers is bent toward a side opposite to the metal layer side, and the spaced metal layers are brought into contact with each other without a gap may be used. In such a collector foil, the metal layers in contact with each other without a gap can be divided as the distance between the pallets increases.

From the viewpoint of transportability and the like, a thickness of the collector foil (including the case of the laminate) is preferably 3 µm or more, more preferably 5 µm or more, and particularly preferably 10 µm or more.

From the viewpoint of flexibility and lightness, the thickness of the collector foil is preferably 100 µm or less, more preferably 70 µm or less, and particularly preferably 50 µm or less.

The thickness of the collector foil is obtained by the same method as the thickness of the electrode material film.

### [Molding member]

Examples of the molding member include a blade.

As described above, the blade as the molding member may vibrate in a case of coming into contact with the electrode material.

### (Blade)

The blade is a member having a plate-like shape, but the shape, size, material, and the like of a contact portion which comes into contact with the electrode material may be appropriately determined depending on physical properties of the electrode material (the kind of the electrode active material, the concentration of solid components, the composition (viscosity, surface tension, and the like) of the electrolytic solution, and the like), the size and thickness of the electrode material film to be formed, and the like.

In addition, it is preferable that the contact portion of the blade with the electrode material is less likely to cause the electrode material to adhere thereto; and for example, at least the surface of the blade preferably exhibits releasability.

For example, the blade may be made of a fluororesin such as polytetrafluoroethylene (PTFE) or a resin such as polyether ether ketone (PEEK), may be made of a metal such as stainless steel, aluminum, iron, or a hard alloy, or may be made of a ceramic.

In addition, in order to impart the releasability to the surface, the blade may include a surface layer (for example, a surface layer containing a fluorine-based resin, and a surface layer containing silicon-based particles and a resin) exhibiting the releasability.

Furthermore, from the viewpoint of improving abrasion resistance, the blade may include a high-hardness coating film such as titanium oxide, titanium nitride (TiN), and tungsten carbide on a metal or ceramic blade body.

### [Electrode material]

The electrode material contains an electrode active material, a conductive auxiliary agent, and an electrolytic solution, and may contain an additive as necessary.

A concentration of solid components of the electrode material is preferably 30% by volume to 90% by volume, and more preferably 40% by volume to 80% by volume.

### (Electrode active material)

The electrode active material is a substance capable of intercalating and deintercalating ions of a metal element belonging to Group 1 or Group 2 in the periodic table. The electrode active material is included in the solid components.

Examples of the electrode active material include a positive electrode active material and a negative electrode active material.

### -Positive electrode active material-

The positive electrode active material is not limited, and a known electrode active material used for a positive electrode can be used. The positive electrode active material is preferably a positive electrode active material capable of reversibly intercalating and deintercalating lithium ions.

Specific examples of the positive electrode active material include a transition metal oxide and an element (for example, sulfur) which can be compounded with lithium. Among the above, the positive electrode active material is preferably a transition metal oxide.

The transition metal oxide is preferably a transition metal oxide containing at least one transition metal element (hereinafter, referred to as "element Ma") selected from the group consisting of cobalt (Co), nickel (Ni), iron (Fe), manganese (Mn), copper (Cu), and vanadium (V).

In a case where the transition metal oxide contains Li and the element Ma, a molar ratio (Li/Ma) of Li to Ma is preferably 0.3 to 2.2.

In addition, the transition metal oxide may contain at least one transition metal element (hereinafter, referred to as "element Mb") selected from the group consisting of a Group 1 element other than lithium, a Group 2 element, aluminum (Al), gallium (Ga), indium (In), germanium (Ge), tin (Sn), lead (Pb), antimony (Sb), bismuth (Bi), silicon (Si), phosphorus (P), and boron (B). A content of the element Mb is preferably 0 mol% to 30 mol% with respect to a substance amount of the element Ma.

Examples of the transition metal oxide include transition metal oxides having a bedded salt-type structure, transition metal oxides having a spinel-type structure, lithium-containing transition metal phosphoric acid compounds, lithium-containing transition metal halogenated phosphoric acid compounds, and lithium-containing transition metal silicate compounds.

Examples of the transition metal oxide having a bedded salt-type structure include LiCoO₂ (lithium cobalt oxide [LCO]), LiNi₂O₂ (lithium nickelate), LiNi_{0.85}Co_{0.10}Al_{0.05}O₂ (lithium nickel cobalt aluminum oxide [NCA]), LiNi_{1/3}Co_{1/3}Mn_{1/3}O₂ (lithium nickel manganese cobalt oxide [NMC]), and LiNi_{0.5}Mn_{0.5}O₂ (lithium manganese nickelate).

Examples of the transition metal oxide having a spinel-type structure include LiCoMnO₄, Li₂FeMn₃O₈, Li₂CuMn₃O₈, Li₂CrMn₃O₈, and Li₂NiMn₃O₈.

Examples of the lithium-containing transition metal phosphoric acid compound include an olivine-type iron phosphate salt (for example, LiFePO₄ and Li₃Fe₂(PO₄)₃), a pyrroline phosphate salt (for example, LiFeP₂O₇), a cobalt phosphate salt (for example, LiCoPO₄), and a monoclinic vanadium phosphate salt (for example, Li₃V₂(PO₄)₃ (lithium vanadium phosphate)).

Examples of the lithium-containing transition metal halogenated phosphoric acid compound include an iron fluorophosphate (for example, Li₂FePO₄F), a manganese fluorophosphate (for example, Li₂MnPO₄F), and a cobalt fluorophosphate (for example, Li₂CoPO₄F).

Examples of the lithium-containing transition metal silicate compound include Li₂FeSiO₄, Li₂MnSiO₄, and Li₂CoSiO₄.

The transition metal oxide is preferably a transition metal oxide having a bedded salt-type structure, and more preferably at least one compound selected from the group consisting of LiCoO₂ (lithium cobalt oxide [LCO]), LiNi_{0.85}Co_{0.10}Al_{0.05}O₂ (lithium nickel cobalt aluminum oxide [NCA]), and LiNi_{1/3}Co_{1/3}Mn_{1/3}O₂ (lithium nickel manganese cobalt oxide [NMC]).

The positive electrode active material may be a commercially available product, or may be a synthetic product produced with a known method (for example, a baking method). For example, a positive electrode active material obtained by the baking method may be washed with water, an acidic aqueous solution, an alkaline aqueous solution, or an organic solvent.

In addition, the positive electrode active material may have a carbon coating on the surface thereof.

A shape of the positive electrode active material is not limited, but from the viewpoint of handle ability, it is preferably a particle shape.

A volume average particle diameter of the positive electrode active material is not limited, and can be, for example, 0.1 µm to 50 µm. The volume average particle diameter of the positive electrode active material is preferably 0.3 µm to 40 µm and more preferably 0.5 µm to 30 µm.

In a case where the volume average particle diameter of the positive electrode active material is 0.3 µm or more, it is possible to suppress the positive electrode active material from being scattered during handling. In a case where the volume average particle diameter of the positive electrode active material is 40 µm or less, the thickness of the electrode layer can be easily adjusted, and generation of voids in the molding process can be suppressed.

The volume average particle diameter of the positive electrode active material is measured by the following method.

A dispersion liquid containing 0.1% by mass or less of the positive electrode active material is prepared by mixing the positive electrode active material with a solvent (for example, pure water, ethanol, heptane, octane, toluene, or xylene). The dispersion liquid is irradiated with ultrasonic waves of 1 kHz for 10 minutes to be used as a measurement sample. Using a laser diffraction/scattering-type particle size distribution analyzer (for example, LA-960 manufactured by Horiba, Ltd.), data is taken in 50 times under a condition of a temperature of 25°C, and a volume average particle diameter is obtained from a volume frequency-particle size distribution. A quartz cell is used as a cell for the measurement. The above-described measurement is carried out using five samples, and an average of the measured values is defined as the volume average particle diameter of the positive electrode active material. For other detailed conditions, "JIS Z 8828: 2013" is referred to as necessary.

Examples of a method of adjusting the particle diameter of the positive electrode active material include a method of using a pulverizer, a disintegrator, or a classifier. In addition, a known milling method may be applied as the method of adjusting the particle diameter of the positive electrode active material.

One kind of the positive electrode active material may be used alone, or two or more kinds thereof may be used in combination.

In addition, even in a case of using one kind of the positive electrode active material, positive electrode active materials having different particle diameters may be used in combination.

A content of the positive electrode active material with respect to the total volume of the electrode material is preferably 30% by volume to 60% by volume, more preferably 35% by volume to 55% by volume, and still more preferably 40% by volume to 50% by volume.

In the manufacturing method of an electrode layer according to the present disclosure, the amount of the positive electrode active material used is determined such that the content in the electrode material film is within the above-described range.

### -Negative electrode active material-

The negative electrode active material is not limited, and a known electrode active material used for a negative electrode can be used. The negative electrode active material is preferably a negative electrode active material capable of reversibly intercalating and deintercalating lithium ions.

Examples of the negative electrode active material include a carbonaceous material, a metal oxide (for example, tin oxide), silicon oxide, a metal composite oxide, a lithium single substance, a lithium alloy (for example, a lithium aluminum alloy), and a metal capable of forming an alloy with lithium (for example, Sn, Si, and In). Among the above, from the viewpoint of reliability, the negative electrode active material is preferably a carbonaceous material or a lithium composite oxide.

The carbonaceous material is a material substantially consisting of carbon.

Examples of the carbonaceous material include a carbonaceous material obtained by firing petroleum pitch, carbon black (for example, acetylene black), graphite (for example, natural graphite or artificial graphite (for example, vapor-grown graphite)), hard carbon, and a synthetic resin (for example, polyacrylonitrile (PAN) and a furfuryl alcohol resin). Examples of the carbonaceous material also include carbon fiber (for example, polyacrylonitrile-based carbon fiber, cellulose-based carbon fiber, pitch-based carbon fiber, vapor-grown carbon fiber, dehydrated polyvinyl alcohol (PVA)-based carbon fiber, lignin carbon fiber, vitreous carbon fiber, and activated carbon fiber). Examples of the graphite include mesophase microsphere, graphite whisker, and plate-like graphite.

In the present disclosure, the "plate-like" means a shape having two principal planes facing opposite to each other.

The metal composite oxide is preferably a metal composite oxide capable of intercalating and deintercalating lithium.

From the viewpoint of high current density-charging and discharging characteristics, the metal composite oxide capable of intercalating and deintercalating lithium preferably contains at least one element selected from the group consisting of titanium and lithium.

The metal oxide and the metal composite oxide are particularly preferably an amorphous oxide.

The metal oxide and the metal composite oxide are also preferably a chalcogenide. The chalcogenide is a reaction product of a metal element and an element of Group 16 in the periodic table.

Among compound groups consisting of the amorphous oxide and the chalcogenide, an amorphous oxide of a metalloid element or a chalcogenide is preferable, and an oxide containing at least one element selected from the group consisting of elements belonging to Group 13 to Group 15 in the periodic table, Al, Ga, Si, Sn, Ge, Pb, Sb, and Bi, or a chalcogenide is more preferable.

It is also preferable that the negative electrode active material further contains titanium. From the viewpoint that the negative electrode active material containing titanium has excellent high-speed charging and discharging characteristics due to small volume changes during the intercalation and deintercalation of lithium ions, and the suppression of the deterioration of the electrode can improve life of a lithium ion secondary battery, it is preferable that the negative electrode active material containing titanium is lithium titanium oxide (Li₄Ti₅O₁₂ [LTO]).

The negative electrode active material may be a commercially available product, or may be a synthetic product produced with a known method (for example, a baking method). For example, a negative electrode active material obtained by the baking method may be washed with water, an acidic aqueous solution, an alkaline aqueous solution, or an organic solvent.

The negative electrode active material is available, for example, as CGB20 (Nippon Kokuen Group).

The composition of the negative electrode active material is measured by inductively coupled plasma (ICP) emission spectroscopy.

A shape of the negative electrode active material is not limited, but is preferably a particle shape from the viewpoint of ease of handling and ease of managing uniformity in a case of mass production.

A volume average particle diameter of the negative electrode active material is preferably 0.1 µm to 60 µm, more preferably 0.3 µm to 50 µm, and particularly preferably 0.5 µm to 40 µm.

The volume average particle diameter of the negative electrode active material is measured with a method based on the method of measuring the volume average particle diameter of the positive electrode active material described above.

Examples of a method of adjusting the particle diameter of the negative electrode active material include a method of using a pulverizer or a classifier.

One kind of the negative electrode active material may be used alone, or two or more kinds thereof may be used in combination.

In addition, even in a case of using one kind of the negative electrode active material, negative electrode active materials having different particle diameters may be used in combination.

A content of the negative electrode active material with respect to the total volume of the electrode material is preferably 30% by volume to 60% by volume, more preferably 35% by volume to 57% by volume, and still more preferably 45% by volume to 55% by volume.

In the manufacturing method of an electrode layer according to the present disclosure, the amount of the negative electrode active material used is determined such that the content in the electrode material film is within the above-described range.

Surfaces of the positive electrode active material and the negative electrode active material may be coated with a surface coating agent, respectively. Examples of the surface coating agent include a metal oxide containing Ti, Nb, Ta, W, Zr, Si, or Li. Examples of the above-described metal oxide include a titanium oxide spinel, a tantalum-based oxide, a niobium-based oxide, and a lithium niobate-based compound.

### (Conductive auxiliary agent)

From the viewpoint of improving electron conductivity of the electrode active material, the electrode material film contains a conductive auxiliary agent. The conductive auxiliary agent is not limited, and a known conductive auxiliary agent can be used.

The conductive auxiliary agent is included in the solid components.

Examples of the conductive auxiliary agent include graphite (for example, natural graphite and artificial graphite), carbon black (for example, acetylene black, Ketjen black, and furnace black), amorphous carbon (for example, needle coke), carbon fiber (for example, vapor-grown carbon fiber and carbon nanotube), other carbonaceous materials (for example, graphene and fullerene), metal powder (for example, copper powder and nickel powder), metal fiber (for example, copper fiber and nickel fiber), and a conductive polymer (for example, polyaniline, polypyrrole, polythiophene, polyacetylene, and a polyphenylene derivative).

The conductive auxiliary agent may be used alone or in combination of two or more kinds thereof.

A content of the conductive auxiliary agent with respect to the total volume of the electrode material is preferably 0.05% by volume to 5% by volume, more preferably 0.1% by volume to 4% by volume, and still more preferably 0.5% by volume to 3% by volume.

In the manufacturing method of an electrode layer according to the present disclosure, the amount of the conductive auxiliary agent used is determined such that the content in the electrode material film is within the above-described range.

### (Electrolytic solution)

The electrolytic solution is not particularly limited, and a known electrolytic solution can be used. Examples of the electrolytic solution include an electrolytic solution containing an electrolyte and a solvent. Specific examples of the electrolytic solution include an electrolytic solution containing a lithium salt compound as the electrolyte and a carbonate compound as the solvent.

Examples of the lithium salt compound include lithium hexafluorophosphate. The electrolytic solution may contain only one kind of the lithium salt compound or may contain two or more kinds of the lithium salt compounds.

Examples of the carbonate compound include a chain-like carbonate compound such as ethyl methyl carbonate (also referred to as EMC), dimethyl carbonate (also referred to as DMC), and diethyl carbonate (DEC); and a cyclic carbonate compound such as ethylene carbonate (also referred to as EC) and propylene carbonate (also referred to as PC). The electrolytic solution may contain only one kind of the carbonate compound, may contain two or more kinds of the carbonate compounds, or may contain a combination of one or more kinds of the chain-like carbonate compounds and one or more kinds of the cyclic carbonate compounds.

As the electrolyte contained in the electrolytic solution, for example, a known inorganic solid electrolyte can also be used.

As a component of the electrolytic solution, for example, an ionic liquid may be used. The ionic liquid may be used as the electrolyte or the solvent.

A content of the electrolytic solution with respect to the total volume of the electrode material is preferably 70% by volume or less, and may be 50% by volume or less or 40% by volume or less. The lower limit of the content of the electrolytic solution with respect to the total volume of the electrode material is not limited, and may be 10% by volume or more or 30% by volume or more.

The content of the electrolytic solution with respect to the total volume of the electrode material is, for example, preferably 30% by volume to 50% by volume.

### (Solvent)

The electrode material film may contain, as the liquid components, a solvent other than the solvent contained as the component of the electrolytic solution (hereinafter, also simply referred to as "solvent").

Examples of the solvent include an alcohol compound solvent, an ether compound solvent, an amide compound solvent, an amino compound solvent, a ketone compound solvent, an aromatic compound solvent, an aliphatic compound solvent, and a nitrile compound solvent.

A boiling point of the solvent at normal pressure (that is, 1 atm) is preferably 50°C or higher, and more preferably 70°C or higher. The upper limit of the boiling point of the solvent at normal pressure (that is, 1 atm) is preferably 250°C or lower, and more preferably 220°C or lower.

The solvent may be used alone or in combination of two or more kinds thereof.

A content of the liquid components (that is, the electrolytic solution and the solvent) with respect to the total volume of the electrode material is preferably 70% by volume or less, and may be 50% by volume or less or 40% by volume or less. The lower limit of the content of the liquid components with respect to the total volume of the electrode material is not limited, and may be 10% by volume or more or 30% by volume or more.

The content of the liquid components with respect to the total volume of the electrode material is preferably 30% by volume to 50% by volume.

The liquid component contained in the electrode material film, that is, the component in the electrode material film, which is in a liquid state at 25°C, is preferably in a liquid state even at -10°C and preferably in a liquid state even at -20°C. That is, the component in the electrode material film, which is in a liquid state at 25°C, is preferably a component which does not solidify at -10°C, and preferably a component which does not solidify at -20°C.

### (Other components)

The electrode material film may contain a binder, a dispersant, and other additives in addition to the above-described components. However, in the electrode material film, from the viewpoint of improving the energy density, it is preferable that a content of the binder is low, and it is more preferable that the binder is not contained.

Examples of the binder include a fluorine-containing resin, a hydrocarbon-based thermoplastic resin, an acrylic resin, and a urethane resin.

In addition, the dispersant may be a known dispersant which can disperse a dispersion target.

Furthermore, as the other additives, known additives added to the electrode can be used.

### <<Electrode layer>>

The electrode layer obtained by the manufacturing method of an electrode layer according to the present disclosure can be used as various electrodes. The electrode layer may be used as it is as a sheet electrode layer, or may be used as an electrode after further processing.

The sheet-like electrode layer is preferably an electrode layer of a semi-solid state secondary battery.

From the viewpoint of improving battery performance (for example, discharge capacity and output characteristics), the thickness of the electrode layer is preferably 50 µm to 500 µm, and the concentration of solid components is preferably 30% by volume to 90% by volume, same as in the above-described electrode material film.

The thickness and the concentration of solid components of the electrode layer are determined by the same methods as the thickness and the concentration of solid components of the electrode material film.

In addition, in a case where a positive electrode layer and a negative electrode layer are manufactured by the manufacturing method of an electrode layer according to the present disclosure, a battery can be obtained by bonding the obtained positive electrode layer and negative electrode layer to each other with a separator interposed therebetween.

### Examples

Hereinafter, the present disclosure will be described in detail with reference to Examples, but the present disclosure is not limited thereto.

Each step in each example described later was performed in a dry room (low-dew point room) at 22°C.

### [Preparation of positive electrode material (P1)]

(1) 13.4 g of LiPF₆ (electrolyte) was mixed with a mixed solution obtained by mixing 45 g of ethylene carbonate (EC), 10 g of propylene carbonate (PC), and 45 g of diethyl carbonate (DEC), and then 2.3 g of vinylene carbonate (VC) was further mixed therewith; 64 g of the obtained 115.7 g of the mixed solution was taken out, and used as an electrolytic solution X1.
(2) 2 g of a conductive auxiliary agent (Ketjen black: "CARBON ECP600JD" manufactured by LION SPECIALTY CHEMICALS CO., LTD.) and 174 g of a positive electrode active material (iron phosphate: "LFP NCO M121" manufactured by Aleees) were stirred at 1,500 revolutions per minute (rpm) for 30 seconds AWATORI RENTARO (manufactured by THINKY Corporation) to prepare a kneaded material Y1 (176 g).
(3) The electrolytic solution X1 (64 g) was added to the kneaded material Y1 (176 g), and the mixture was stirred at 1,500 rpm for 120 seconds with AWATORI RENTARO (manufactured by THINKY Corporation) to obtain a positive electrode material (P1).

The obtained positive electrode material (P1) was a Bingham plastic fluid having a yield value of 45 kPa, and a volume ratio of the solid components and the liquid components was 48:52.

### [Preparation of collector foil (S1)]

Collector foil (S1): PET film including a thermal fusion layer which contained an ethylene-vinyl acetate copolymer (EVA) and was bonded, by thermal fusion, to a back surface of a positive electrode collector foil (an aluminum foil, an average thickness: 20 µm, Ra: 0.5 µm, EAA-218D, a carbon-coated product manufactured by Korea JCC)

The Ra of the collector described above refers to an arithmetic average roughness Ra on a surface on which the electrode material film is formed.

### [Preparation of blade (B1)]

Blade (B1): blade made of stainless steel

### [Preparation of pallet (P1)]

Pallet (P1): pallet which was a laminate of a porous carbon layer having a thickness of 5 mm and a carbon fiber composite material layer having a thickness of 25 mm; a surface was a rectangle of 500 mm (width direction) × 150 mm (transport direction); there was a portion of a groove for supplying air.

### <Example 1>

An electrode material film was formed on a collector foil using the device shown in Fig. 1. In Example 1, the collector foil (S1) and the positive electrode material (P1) were used, and the pallet (P1) was used as the pallet 10 and the blade (B1) was used as the blade 60.

First, a surface shape of each of the plurality of pallets 10 on which the collector foil was fixed was measured with a non-contact laser interferometer.

The blade 60 was disposed so as to maintain a constant distance of 200 µm from the surface of the collector foil 30 placed on the transport member 12 in which the pallets 10 after measuring the surface shape were connected. A disposing position of the distal end of the blade 60 was set at a relative position with respect to the measured surface shape of the pallet 10 with reference to the set position. Here, the disposing position of the distal end of the blade 60 was adjusted by only using the expansion and contraction of the ball screw 64. That is, the disposing position of the distal end of the blade 60 was adjusted so as to follow the surface shape of the pallet 10 by using the expansion and contraction of the ball screw 64.

The electrode material 40 was supplied onto the collector foil 30 using the electrode material supply device 50, a reservoir portion 46 of the electrode material 40 was formed between the collector foil 30 and the blade 60, and then the transport member 12 was moved in the Z direction (that is, the MD direction) to regulate the thickness of the electrode material 40 by the molding member and form the electrode material film 42 on the collector foil 30. In this case, a moving speed of the transport member 12, that is, a transportation speed of the collector foil was set to 10 mm/sec.

The blade which is the molding member was vibrated by the piezoelectric actuator. An amplitude of the vibrating blade was ±3 µm, and a period thereof was 600 Hz.

Next, the pallets 10 were spaced apart from each other at a speed of 10 mm/sec, and the laminate 70 of the collector foil 30 and the electrode material film 42 was divided for each one pallet.

A concentration of solid contents of the obtained electrode material film was 47% by volume.

In this manner, an electrode layer was obtained.

### <Example 2>

An electrode layer was obtained in the same manner as in Example 1, except that the disposing position of the distal end of the blade 60 was set as follows.

That is, the disposing position of the distal end of the blade 60 was adjusted by using the expansion and contraction of the ball screw 64 and the expansion and contraction of the piezoelectric element in the piezoelectric actuator 62. That is, the disposing position of the distal end of the blade 60 was adjusted to follow the surface shape of the pallet 10 by using the expansion and contraction of the piezoelectric element in the piezoelectric actuator 62, in addition to the expansion and contraction of the ball screw 64.

A concentration of solid contents of the electrode material film obtained in the present example was 47% by volume.

### <Example 3>

An electrode layer was obtained in the same manner as in Example 2, except that the moving speed of the transport member 12, that is, the transportation speed of the collector foil in a case of forming the electrode material film 42 was changed to 200 mm/sec.

A concentration of solid contents of the electrode material film obtained in the present example was 47% by volume.

### <Example 4>

An electrode layer was obtained in the same manner as in Example 2, except that the moving speed of the transport member 12, that is, the transportation speed of the collector foil in a case of forming the electrode material film 42 was changed to 200 mm/sec, and the disposing position of the distal end of the blade 60 was set as follows.

The setting of the disposing position of the distal end of the blade 60 will be described in detail.

A length of the pallet in the transport direction was set as a reference length L, and a numerical value of the surface shape of one pallet was subjected to Fourier transform to calculate the amplitude for each of the reference length L, L/2, L/3, L/4, and the like. Based on the calculated values, the amplitude of the L period (first-order component) of the disposing position of the distal end of the blade 60 was adjusted by the expansion and contraction of the ball screw 64, and the amplitude of the L/4 period (fourth-order component) was further adjusted by the expansion and contraction of the piezoelectric element.

A concentration of solid contents of the electrode material film obtained in the present example was 47% by volume.

### <Evaluation for in-plane thickness uniformity>

After the formation of the electrode material film, a surface shape of the electrode material film was measured in the same manner as the surface shape of the surface of the collector foil.

The measured value of the surface shape of the obtained electrode material film and the measured value of the surface shape of the surface of the collector foil could be associated with the position information of the pallet, and the difference at each position was defined as the film thickness of the electrode material film. The film thicknesses of 100 points were extracted every 1 mm along the transport direction. The measurement position was set to a total of three lines including one line at the center of the electrode material film in the width direction and two lines spaced apart from the center by 90 mm to the left and right. Based on the film thickness values of 300 points (100 points × 3 lines), the average value and the standard deviation thereof (average value ± standard deviation) were obtained.

The results are shown below.
· Example 1: 210 µm ± 13 µm
· Example 2: 203 µm ± 3 µm
· Example 3: 201 µm ± 6 µm
· Example 4: 202 µm ± 4 µm

### (Explanation of References)

10: pallet
12: transport member
20: surface shape examination device
30: collector foil
32: divided collector foil
40: electrode material
42: electrode material film
44: divided electrode material film
46: reservoir portion of electrode material
50: electrode material supply device
60: film forming member (blade)
62: piezoelectric actuator
64: ball screw
66: connecting portion
70: laminate
72: divided laminate
80: table
82: rail
80: table
82: rail
84: fixing member
90: LM guide
Z: transport direction of transport member
A: direction of force applied from electrode material to blade
B: direction in which piezoelectric actuator is stretched

The disclosure of JP2022-159830 filed on October 3, 2022 is incorporated in the present specification by reference.

All documents, patent applications, and technical standards described in the present specification are incorporated herein by reference to the same extent as in a case of being specifically and individually noted that individual documents, patent applications, and technical standards are incorporated herein by reference.

## Claims

1. A manufacturing method of an electrode layer, comprising:
a step A of measuring a surface shape of a transport member;
a step B of placing a collector foil on the transport member after the surface shape is measured, and transporting the collector foil by moving the transport member;
a step C of supplying, onto the transported collector foil, an electrode active material containing an electrode active material, a conductive auxiliary agent, and an electrolytic solution; and
a step D of passing the electrode material supplied onto the collector foil through a gap formed between the transport member and a distal end of a film forming member which is disposed at a position spaced apart from a surface of the transport member to regulate a thickness of the electrode material and form an electrode material film,
wherein, in the step D, a disposing position of the film forming member is controlled based on measurement information of the surface shape of the transport member, which is obtained in the step A.

2. The manufacturing method of an electrode layer according to claim 1,
wherein, in the step D, a distal end position of the film forming member is adjusted according to a force applied to the film forming member by the electrode material.

3. The manufacturing method of an electrode layer according to claim 1 or 2,
wherein a vibrating film forming member is used as a film forming material, and
in the step D, at least one of a frequency or an amplitude of vibration of the film forming member is changed based on a force applied to the film forming member by the electrode material.

4. The manufacturing method of an electrode layer according to claim 1 or 2,
wherein a concentration of solid components of the electrode material is 30% by volume to 90% by volume.

5. The manufacturing method of an electrode layer according to claim 1 or 2,
wherein, in a case where a maximum height of the electrode material supplied in the step C is indicated by X and a width of the gap formed between the transport member and the distal end of the film forming member which is disposed at the position spaced apart from the surface of the transport member is indicated by Y, a relationship of X > Y is satisfied.
